# EUROPÄISCHE PATENTANMELDUNG

(11) **EP 1 396 921 A2**
(43) Veröffentlichungstag der Anmeldung: **10.03.2004**
(21) Anmeldenummer: 03019430.2
(22) Anmeldetag: 28.08.2003
(51) Int. Cl.: H02K 7/18

(54) **Antriebssystem**

(30) Priorität: 04.09.2002 DE 10240677
(71) Anmelder: ZF Sachs AG, 97424 Schweinfurt (DE)
(72) Erfinder: Hirschmann, Frank, Dipl.-Ing., 97464 Niederwerrn (DE)

(57) **Zusammenfassung**

Ein Antriebssystem umfasst eine Elektromaschine (16) mit einer Statoranordnung (44) und einer mit einem Antriebsorgan zur gemeinsamen Drehung um eine Drehachse verbundenen oder verbindbaren Rotoranordnung (60), wobei durch die Elektromaschine (16) das Antriebsorgan zur Drehung antreibbar ist oder/und bei Drehung des Antriebsorgans elektrisch Energie gewinnbar ist, eine Kupplungsanordnung (14) mit einem mit dem Antriebsorgan zur gemeinsamen Drehung um die Drehachse verbundenen oder verbindbaren Eingangsbereich (18) und wenigstens einem mit einem Abtriebsorgan (12) verbundenen oder verbindbaren Ausgangsbereich (32), eine die Elektromaschine (16) und die Kupplungsanordnung (10) umgebende Gehäuseanordnung (56, 68, 70) mit zwei in axialer Richtung aufeinander folgenden Gehäusebereichen (68, 70) und einem zwischen den beiden Gehäusebereichen (68, 70) angeordneten Gehäusezwischenbereich (56), an welchem die Statoranordnung (44) der Elektromaschine (16) getragen ist.

## Beschreibung

Die vorliegende Erfindung betrifft ein Antriebssystem, umfassend eine Elektromaschine mit einer Statoranordnung und einer mit einem Antriebsorgan zur gemeinsamen Drehung um eine Drehachse verbundenen oder verbindbaren Rotoranordnung, wobei durch die Elektromaschine das Antriebsorgan zur Drehung antreibbar ist oder/und bei Drehung des Antriebsorgans elektrisch Energie gewinnbar ist, eine Kupplungsanordnung mit einem mit dem Antriebsorgan zur gemeinsamen Drehung um die Drehachse verbundenen oder verbindbaren Eingangsbereich und wenigstens einem mit einem Abtriebsorgan verbundenen oder verbindbaren Ausgangsbereich.

Beim Einsatz von Antriebssystemen, bei welchen einerseits das Drehmoment zum Anlassen einer Brennkraftmaschine und andererseits elektrische Energie für das Bordnetzsystem durch eine in das Antriebssystem integrierte Elektromaschine bereitgestellt werden können, ergeben sich im Betrieb bezüglich herkömmlicher Systeme mit Lichtmaschine und dergleichen verschiedene Vorteile. Es wird jedoch erforderlich, einen zusätzlichen Systembereich, nämlich die Elektromaschine, in das Antriebssystem zu integrieren. Dies erfordert zum einen Bauraum und erfordert ggf. Änderungen an verschiedenen bereits vorhandenen Systemkomponenten.

Es ist die Aufgabe der vorliegenden Erfindung, ein eingangs genanntes Antriebssystem derart auszugestalten, dass eine Eingliederung einer Elektromaschine ohne wesentliche Änderungen an verschiedenen Komponenten eines Antriebssystems erfolgen kann.

Erfindungsgemäß wird diese Aufgabe gelöst durch ein Antriebssystem, umfassend eine Elektromaschine mit einer Statoranordnung und einer mit einem Antriebsorgan zur gemeinsamen Drehung um eine Drehachse verbundenen oder verbindbaren Rotoranordnung, wobei durch die Elektromaschine das Antriebsorgan zur Drehung antreibbar ist oder/und bei Drehung des Antriebsorgans elektrisch Energie gewinnbar ist, eine Kupplungsanordnung mit einem mit dem Antriebsorgan zur gemeinsamen Drehung um die Drehachse verbundenen oder verbindbaren Eingangsbereich und wenigstens einem mit einem Abtriebsorgan verbundenen oder verbindbaren Ausgangsbereich, eine die Elektromaschine und die Kupplungsanordnung umgebende Gehäuseanordnung mit zwei in axialer Richtung aufeinander folgenden Gehäusebereichen und einem zwischen den beiden Gehäusebereichen angeordneten Gehäuse-Zwischenbereich, an welchem die Statoranordnung der Elektromaschine getragen ist.

Von Bedeutung ist bei der vorliegenden Erfindung, dass zum Eingliedern der Elektromaschine, insbesondere zum Tragender Statoranordnung derselben, keine bereits vorhandenen Komponenten geändert werden müssen, sondern eine zusätzliche Komponente bereitgestellt wird, die diese Funktion übernimmt. Dies ermöglicht es, die beiden Gehäusebereiche, welche beispielsweise in Zuordnung zum Getriebe einerseits und in Zuordnung zum Antriebsaggregat andererseits bei herkömmlichen Antriebssystemen ohnehin schon vorhanden sind, unverändert zu belassen und lediglich einen Zwischenbereich zwischen diese zu schalten, der einerseits den axialen Bauraum für das Eingliedern der Elektromaschine schafft und andererseits auch gleichzeitig eine Trägerfunktion übernimmt.

Um dieses Eingliedern eines zusätzlichen Abschnitts in das Gehäuse zu erleichtern, wird vorgeschlagen, dass einer der Gehäusebereiche einen ersten Verbindungsbereich aufweist, welcher zur Verbindung mit einem zweiten Verbindungsbereich des anderen der Gehäusebereiche ausgebildet ist, und dass am Gehäusezwischenbereich in Zuordnung zu dem ersten Verbindungsbereich ein dritter Verbindungsbereich vorgesehen ist, welcher entsprechend dem zweiten Verbindungsbereich ausgebildet ist, und in Zuordnung zu dem zweiten Verbindungsbereich ein vierter Verbindungsbereich vorgesehen ist, welcher entsprechend dem ersten Verbindungsbereich ausgebildet ist.

Weiter ist es insbesondere zur Abfuhr von im Bereich der Elektromaschine generierter Wärme vorteilhaft, wenn der Gehäusezwischenbereich eine Kühlmittelströmungskanalanordnung zum Führen von Kühlmittel in den Bereich eines Stator-Wechselwirkungsbereichs der Statoranordnung aufweist.

Zum Tragen der Statoranordnung an dem Gehäusezwischenbereich kann vorgesehen sein, dass der Gehäusezwischenbereich einen nach radial innen ragenden ersten Trägerabschnitt einer Statorträgeranordnung beeitstellt, mit welchem ein an seinem Außenumfang ein einen Stator-Wechselwirkungsbereich tragender zweiter Trägerabschnitt der Statorträgeranordnung getragen ist.

Dabei kann das der Kühlung dienende Medium vergleichsweise nahe an den thermisch kritischen Bereich, nämlich den allgemein durch Bestromung zu erregenden Stator-Wechselwirkungsbereich, herangeführt werden, wenn die Kühlmittelströmungskanalanordnung einen Kanalbereich in dem ersten Trägerabschnitt und einen Kanalbereich in dem zweiten Trägerabschnitt aufweist.

Gemäß einem weiteren Aspekt der vorliegenden Erfindung ist ein Antriebssystem vorgesehen, umfassend eine Elektromaschine mit einer Statoranordnung und einer mit einem Antriebsorgan zur gemeinsamen Drehung um eine Drehachse verbundenen oder verbindbaren Rotoranordnung, wobei durch die Elektromaschine das Antriebsorgan zur Drehung antreibbar ist oder/und bei Drehung des Antriebsorgans elektrisch Energie gewinnbar ist, eine Kupplungsanordnung mit einem mit dem Antriebsorgan zur gemeinsamen Drehung um die Drehachse verbundenen oder verbindbaren Eingangsbereich und wenigstens einem mit einem Abtriebsorgan verbundenen oder verbindbaren Ausgangsbereich, wobei ein Stator-Wechselwirkungsbereich der Statoranordnung und ein Rotor-Wechselwirkungsbereich der Rotoranordnung an einer einem Getriebe zugewandt zu positionierenden Seite der Kupplungsanordnung angeordnet sind.

Bei einem derartigen Antriebssystem kann vorteilhafterweise weiter vorgesehen sein, dass eine Betätigeranordnung für die Kupplungsanordnung in einem von der Elektromaschine umgebenen Raumbereich angeordnet ist. Es wird auf diese Art und Weise eine Ineinanderschachtelung verschiedener Systembereiche ermöglicht, so dass der gesamt erforderliche axiale Bauraum minimiert werden kann und wiederum die Eingliederung in herkömmliche Gehäusebereiche einer die Elektromaschine und die Kupplungsanordnung umgebenen Gehäuseanordnung möglich wird.

Bei einem derartigen erfindungsgemäßen Antriebssystem ist vorzugsweise weiter vorgesehen, dass eine Statorträgeranordnung an dem Getriebe getragen ist. Um die Elektromaschine drehmomentübertragungsmäßig an das Antriebsorgan, also beispielsweise eine Antriebswelle einer Brennkraftmaschine, anbinden zu können, wird vorgeschlagen, dass eine Rotorträgeranordnung zusammen mit einer Druckplattenbaugruppe der Kupplungsanordnung an einer Schwungmasse des Eingangsbereichs der Kupplungsanordnung festgelegt ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Längsschnittansicht eines erfindungsgemäßen Antriebssystems;
- Fig. 2: eine Teil-Längsschnittansicht eines abgewandelten Antriebssystems;
- Fig. 3: eine der Fig. 2 entsprechende Ansicht einer weiteren abgewandelten Ausgestaltungsform;
- Fig. 4: eine weitere Teil-Längsschnittansicht eines abgewandelten Antriebssystems.

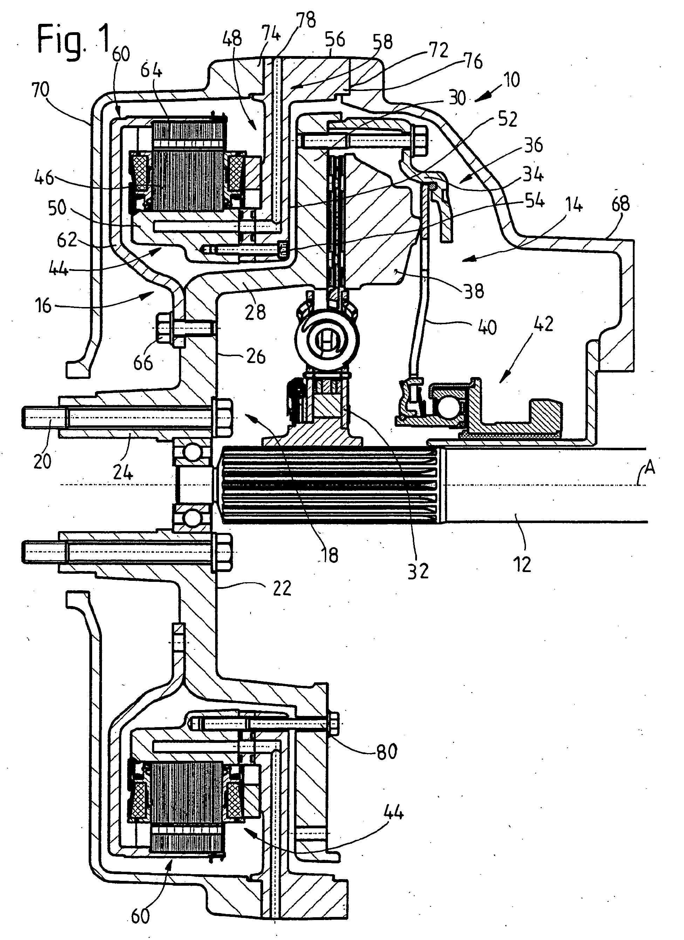

In Fig. 1 ist ein erfindungsgemäßes Antriebssystem allgemein mit 10 bezeichnet. Durch dieses Antriebssystem 10 kann eine nicht dargestellte Antriebswelle, beispielsweise die Kurbelwelle einer Brennkraftmaschine, mit einer Abtriebswelle, beispielsweise einer Getriebeeingangswelle 12, zur Drehmomentübertragung gekoppelt werden. Das Antriebssystem 10 umfasst hierzu als einen Systembereich eine Reibungskupplung 14 und umfasst als weiteren Systembereich eine allgemein mit 16 bezeichnete Elektromaschine.

Die Reibungskupplung 14 weist einen Eingangsbereich 18 auf, der beispielsweise durch Einsatz von Schraubbolzen 20 oder dergleichen mit der Antriebswelle zur gemeinsamen Drehung um die Drehachse A gekoppelt werden kann. Einen Bestandteil dieses Eingangsbereichs 18 bildet das mit 22 bezeichnete und im dargestellten Beispiel als ein Bauteil ausgebildete Schwungrad. Das Schwungrad 22 weist einen ersten näherungsweise axial sich erstreckenden Abschnitt 24 auf, durch welchen die Schraubbolzen 20 hindurchgeführt sind. Daran schließt ein sich näherungsweise radial erstreckender Abschnitt 26 an, auf welchen wieder ein im Wesentlichen axial sich erstreckender Abschnitt 28 folgt. Die beiden im Wesentlichen axial sich erstreckenden Abschnitte 24, 28 überbrücken im Wesentlichen den axial für die Elektromaschine 16 bereitgehaltenen Bauraum an der Innenseite derselben. Folgend auf den Abschnitt 28 ist ein sich im Wesentlichen radial erstreckender Abschnitt 30 vorgesehen, der eine Reibfläche für eine allgemein mit 32 bezeichnete Kupplungsscheibe bzw. der Reibbeläge derselben bereit. Radial außen ist mit dem Abschnitt 30 eine Gehäuseanordnung 34 einer allgemein mit 36 bezeichneten Druckplattenbaugruppe verbunden. Diese umfasst weiterhin eine Anpressplatte 38, die im dargestellten Beispiel unter Beaufschlagung eines als Membranfeder oder dergleichen ausgeführten Kraftspeichers 40 steht. Dieser wiederum ist radial weiter außen an der Gehäuseanordnung 34 abgestützt. Ein Ausrückermechanismus 42 kann radial innen ziehend am Kraftspeicher 40 angreifen, um die Reibungskupplung 14 in einen Ausrückzustand zu bringen. Es sei darauf hingewiesen, dass selbstverständlich die Reibungskupplung 14 auch als Kupplung des gedrückten Typs ausgebildet sein oder anstelle des Kraftspeichers 40 Einrückkraftübertragungshebel oder dergleichen aufweisen kann. Weiterhin ist selbstverständlich der Einsatz einer Doppelkupplung möglich, bei welcher zwei Kupplungsbereiche wahlweise ein Drehmoment vom Eingangsbereich 18 auf eine von zwei dann ggf. koaxial zueinander angeordneten Getriebeeingangswellen übertragen.

Die Elektromaschine 16 umfasst eine Statoranordnung 44 mit einem Stator-Wechselwirkungsbereich 46. Dieser kann eine oder mehrere Spulen oder Wicklungen umfassen, die auf ein Joch gewickelt sind und die Drehachse A allgemein umgebend angeordnet sind. Eine Statorträgeranordnung 48 der Statoranordnung 44 umfasst ein an seinem Außenumfangsbereich den Stator-Wechselwirkungsbereich 46 tragendes Trägerelement 50 von im Allgemeinen ringartiger Gestalt und umfasst weiterhin einen näherungsweise radial sich erstreckenden Trägerabschnitt 52, mit welchem das Trägerelement 50 durch Schraubbolzen 54 oder dergleichen fest verbunden ist. Der Trägerabschnitt 52 ist an einem nachfolgend noch beschriebenen Gehäusezwischenelement 56 ausgebildet. In dem Trägerelement 50 und dem Trägerabschnitt 52 sind jeweils Bereiche einer Strömungskanalanordnung 58 vorgesehen, über welche vom Außenumfangsbereich des Gehäusezwischenelements 56 Kühlmedium in den Bereich des Stator-Wechselwirkungsbereichs 46 gelangen und von dort auch wieder abgezogen werden kann.

Eine Rotoranordnung 60 umfasst an einer beispielsweise aus einem Blechumformteil gebildeten Rotorträgeranordnung 62 einen den Stator-Wechselwirkungsbereich 46 radial außen umgebenden Rotor-Wechselwirkungsbereich 64, der auf einem Joch eine Mehrzahl von in Umfangsrichtung aufeinanderfolgenden Permanentmagneten umfassen kann. Allgemein kann also die Elektromaschine 16 nach Art einer so genannten Synchronmaschine aufgebaut sein und arbeiten. Die Rotorträgeranordnung 62 ist radial innerhalb der Statoranordnung 44 mit dem Eingangsbereich 18 der Reibungskupplung 14, insbesondere dem im Wesentlichen radial sich erstreckenden Abschnitt 26 des Schwungrads oder Masseteils 22, durch mehrere Schraubbolzen 66 oder dergleichen drehfest verbunden.

Wie man im oberen Teil der Fig. 1 erkennt, sind die Elektromaschine 16 und die Reibungskupplung 14 außen durch zwei Gehäusebereiche 68, 70 umgeben. Der Gehäusebereich 68 kann allgemein als Getriebeglocke verstanden werden und kann mit einem Getriebegehäuse integral ausgebildet sein oder daran als separates Bauteil festgelegt sein. Der Gehäusebereich 70 kann als so genannte Schwungrad- oder Kupplungsglocke verstanden werden und kann an einem Motorblock integral ausgebildet sein oder damit als separates Bauteil verbunden sein. Das bereits angesprochene Gehäusezwischenelement 56 ist zwischen diese beiden Gehäusebereiche 68, 70 eingesetzt, so dass nach radial außen hin ein vollständig umkapselter und die Elektromaschine 16 und die Reibungskupplung 14 enthaltender Bauraum gebildet wird. Die beiden Gehäusebereiche 68, 70 sind grundsätzlich so aufeinander abgestimmt, dass ein am Gehäusebereich 68 ausgebildeter erster Verbindungsbereich 72 mit einem komplementär oder passend ausgebildeten zweiten Verbindungsbereich 74 des anderen Gehäusebereichs 70 so zusammengefügt werden kann, dass der vorangehend angesprochene Abschluss erhalten werden kann, beispielsweise bei einem Antriebssystem, bei welchem keine Elektromaschine 16 vorgesehen ist. Um an den beiden Gehäusebereichen 68, 70 keine Änderungen vornehmen zu müssen, weist in Zuordnung zum ersten Verbindungsbereich 72 das Gehäusezwischenelement 56 einen dritten Verbindungsbereich 76 auf, der so geformt ist, wie der zweite Verbindungsbereich 74 des Gehäusebereichs 70. In Zuordnung zu diesem zweiten Verbindungsbereich 74 weist das Gehäuse-Zwischenelement 56 einen vierten Verbindungsbereich 78 auf, der grundsätzlich so geformt ist, wie der erste Verbindungsbereich 72 und somit mit dem zweiten Verbindungsbereich 74 verbunden werden kann. Sowohl zum Gehäusebereich 68 als auch zum Gehäusebereich 70 stellt also das Gehäusezwischenelement 56 jeweils eine Anbindung dar, die so ist, als wenn diese beiden Gehäusebereiche 68, 70 direkt miteinander verbunden wären. Insofern sind keine zusätzlichen Maßnahmen erforderlich, um zwischen einen Gehäusebereich 68 bereitstellendes Getriebe und ein den Gehäusebereich 70 bereitstellendes Antriebsaggregat verschiedene Systeme einzugliedern, bei welchen wahlweise eine Elektromaschine 16 vorgesehen sein kann oder nicht, wobei selbstverständlich dann entsprechender axialer Bauraum bereitgestellt werden muss. Der in dem umschlossenen Bauraum zur Verfügung zu stellende axiale Bauraum wird durch das Eingliedern des Gehäusezwischenelements bereitgestellt.

Bei der Montage des in Fig. 1 dargestellten Systems sind zunächst durch Montagebolzen 80 die Statoranordnung 44 und das Schwungrad 22 und somit auch die Rotoranordnung 60 bezüglich einander gehalten. Auf diese Art und Weise wird verhindert, dass die. Permanentmagneten des Rotor-Wechselwirkungsbereichs 64 zu einer Dejustierung führen. Nachdem die motorseitig zu montierenden Komponenten, insbesondere das Schwungrad 22, dann festgelegt worden sind, können zum Heranführen der weiteren getriebeseitig vorzusehenden Komponenten dann die Montagebolzen 80 entfernt werden und die Druckplattenbaugruppe 36 kann axial an das Schwungrad 22 herangeführt werden.

Es ist selbstverständlich, dass dann, wenn beispielsweise eine Änderung des Gehäusebereichs 68 grundsätzlich akzeptierbar ist, das in der Fig. 1 als separates Bauteil gezeigte Gehäusezwischenelement 56 mit dem Gehäusebereich 68 oder ggf. dem Gehäusebereich 70 integral ausgebildet sein kann.

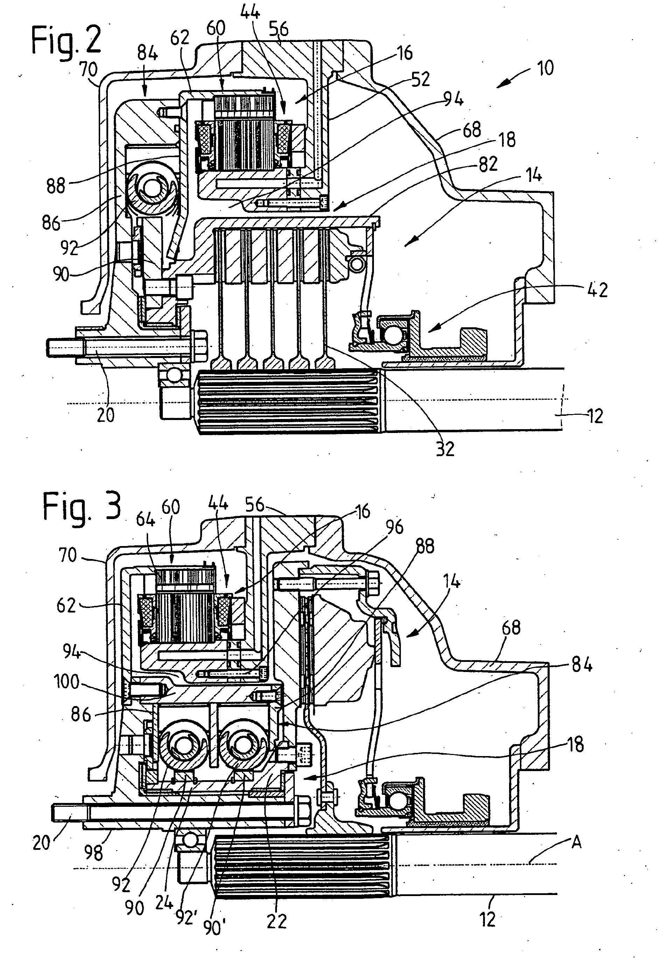

Eine Abwandlung des vorangehend beschriebenen Antriebssystems ist in Fig. 2 dargestellt. Komponenten, welche vorangehend beschriebenen Komponenten hinsichtlich Aufbau bzw. Funktion entsprechen, sind mit dem gleichen Bezugszeichen versehen.

Auch bei dieser Ausgestaltungsform ist die Statoranordnung 44 der Elektromaschine 16 am Gehäusezwischenelement 56 getragen. Die Reibungskupplung 14 ist hier als Mehrscheibenkupplung ausgebildet, und ein Gehäusebereich 82 derselben bildet im Wesentlichen den Eingangsbereich, während eine Mehrzahl von Kupplungsscheiben 32, die beispielsweise auch lamellenartig ausgebildet sein können, das Drehmoment auf die Getriebeeingangswelle überträgt. Man erkennt weiter eine Torsionsschwingungsdämpferanordnung 84, die zwei Deckscheibenelemente 86, 88 aufweist. Eines dieser Deckscheibenelemente ist radial innen durch die Schraubbolzen 20 an die Eingangswelle anzubinden. Das andere der der Deckscheibenelemente, nämlich das Deckscheibenelement 88, ist radial außen mit dem erstgenannten Deckscheibenelement 86 verbunden und bildet gleichzeitig auch die Rotorträgeranordnung 62. Zwischen den beiden Deckscheibenelementen 88, 86 liegt ein Zentralscheibenelement 90, das zur Drehmomentübertragung über Dämpferfedern 92 an die Deckscheibenelemente 86, 88 angekoppelt ist, wobei die Dämpferfedern 92 beispielsweise teilweise in viskoses Medium eingetaucht sein können. Das Zentralscheibenelement 90, das radial innen sowohl in axialer als auch in radialer Richtung bezüglich des Deckscheibenelements 86 abgestützt ist, ist durch Schraubbolzen und dergleichen mit dem Gehäuseelement 82 der Reibungskupplung 14 fest verbunden. Der Eingangsbereich 18 der Reibungskupplung ist ist also somit über die Torsionsschwingungsdämpferanordnung 84 an die nicht dargestellte Antriebswelle angebunden, was bedeutet, dass diese Torsionsschwingungsdämpferanordnung 84 im Drehmomentübertragungsweg zwischen dem Antriebsaggregat und der Reibungskupplung 14 liegt. Die Rotoranordnung 60 der Elektromaschine 16 ist aufgrund der Ankopplung an die Deckscheibenelemente 86, 88 direkt an die Antriebswelle und somit das Antriebsaggregat angebunden. Somit trägt die gesamte Rotoranordnung 60 mit ihrer Masse zur Erhöhung der Primärmassenträgheit der Torsionsschwingungsdämpferanordnung 84, welche hier als so genanntes Zwei-Massen-Schwungrad aufgebaut ist, bei.

Man erkennt, dass unter Einsatz der gleichen Gehäusebereiche 68, 70, wie in Fig. 1 gezeigt, hier ein völlig anderes System geschaffen werden kann, bei welchem der interne Aufbau anders ist, obgleich von außen her ein Abschluss durch herkömmliche Komponenten erlangt werden kann. Insbesondere können auch bei dieser Ausgestaltungsform die Bestromung und die Versorgung der Statoranordnung mit Kühlmedium über das Gehäusezwischenelement 56 erfolgen. Bei diesem System kann gleichwohl eine axial vergleichsweise kurze Baulänge dadurch erlangt werden, dass die als Mehrscheibenkupplung aufgebaute Reibungskupplung 14 axial in den von der Elektromaschine 16 umgebenen Bauraum 94 eintaucht bzw. sich axial mit der Elektromaschine 16 im Wesentlichen vollständig überlappt.

Bei der in Fig. 3 gezeigten Ausgestaltungsform sind die Reibungskupplung 14 und die Elektromaschine 16 allgemein wieder so aufgebaut, wie mit Bezug auf die Fig. 1 beschrieben. In dem von der Elektromaschine 16 umgebenen Bauraum, der bei der in Fig. 1 dargestellten Ausgestältungsform durch Abschnitte des Schwungrads 22 axial überbrückt wird, ist nunmehr eine Torsionsschwingungsdämpferanordnung 84 vorgesehen. Diese umfässt zwei axial gestaffelte Federsätze 92, 92'. Mit dem Schwungrad 22 der Eingangsseite 18 der Reibungskupplung 14 sind an dem sich im Wesentlichen axial erstreckenden Abschnitt 24 desselben nunmehr zwei Zentralscheibenelemente 90, 90' gekoppelt. Die Primärseite der Torsionsschwingungsdämpferanordnung 84 umfasst drei Deckscheibenelemente 86, 88, 96, wobei zwischen jeweils zwei dieser Deckscheibenelemente 86, 88, 96 eines der Zentralscheibenelemente 90, 90' eingreift, um in an sich bekannter Weise mit den jeweiligen Federn 92 bzw. 92' zusammen zu wirken.

Ein durch die Schraubbolzen 20 an der Antriebswelle festlegbares Trägerelement 98 trägt über die Rotorträgeranordnung 62 den Rotor-Wechselwirkungsbereich 64 und trägt weiterhin über ein weiteres Trägerelement 100 die angesprochenen Deckscheibenelemente 86, 88, 96. Ferner ist der Eingangsbereich 18 der Reibungskupplung 14 durch geeignete Lagerungselemente, beispielsweise Gleitlagerungselemente, an diesem Trägerelement 98 sowohl in radialer als auch in axialer Richtung abgestützt.

Auch in Fig. 3 ist also eine den axial zur Verfügung stehenden Bauraum gut nutzende Ausgestaltungsform gezeigt, bei welcher wiederum die beiden Gehäusebereiche 68, 70 standardmäßig geformt sein können und der für die Elektromaschine 16 zusätzlich erforderliche Bauraum dadurch bereitgestellt wird, dass zwischen diese beiden Gehäusebereiche 68, 70 das Gehäusezwischenelement 56 eingesetzt ist. Vor allem der axiale Überlapp zwischen der Elektromaschine 16 und der Torsionsschwingungsdämpferanordung 84 sorgen gleichwohl für eine vergleichsweise kurze axiale Bauart.

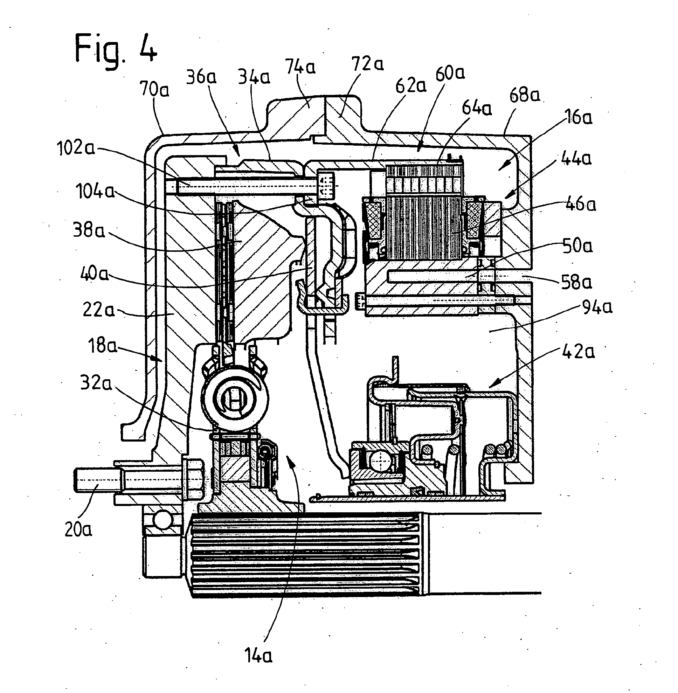

In Fig. 4 ist eine Ausgestaltungsform eines Antriebssystems gezeigt, bei welcher Komponenten, die vorangehend bereits beschrieben worden sind, mit dem gleichen Bezugszeichen unter Hinzufügung eines Anhangs "a" bezeichnet sind.

Man erkennt auch hier wieder die beiden Gehäusebereiche 68a, 70a, die nunmehr mit ihren beiden Verbindungsbereichen 72a, 74a direkt verbunden sind. Dies kann beispielsweise unter Einsatz von Schraubbolzen erfolgen, ebenso wie bei den vorangehend beschriebenen Ausgestaltungsformen diese Gehäusebereiche mit dem Gehäusezwischenelement durch Schraubbolzen verbunden werden können.

Die Reibungskupplung 14a ist mit ihrem Eingangsbereich 18a, also im Wesentlichen dem Schwungrad 22a, unter Einsatz der Schraubbolzen 20a an eine Antriebswelle angekoppelt.

Die Statoranordnung 44a ist nunmehr unter Einsatz des Trägerelements 50a bezüglich des Getriebes festgelegt, beispielsweise an dem Gehäusebereich 68a, wenn dieser als separates Element bereitgestellt ist, oder aber auch an einem Getriebegehäuse. Es ist wieder eine Kühlmittelströmungskanalanordnung 58a vorgesehen, über welche nunmehr von der Getriebeseite her Kühlmedium in den Bereich des Stator-Wechselwirkungsbereichs 46a geleitet werden kann. Dieses Kühlmittel kann beispielsweise aus dem Getriebe abgezogenes Getriebeöl sein. Auch kann die elektrische Kontaktierung des Statorwechselwirkungsbereichs hier von der Getriebeseite her erfolgen. Der Betätigermechanismus 42a, welcher hier wieder als Ausrücker für die nunmehr als gedrückte Kupplung ausgebildete Reibungskupplung 14a vorgesehen ist, ist in dem von der Elektromaschine 16a umgebenen Bauraum 94a angeordnet und überlappt sich im Wesentlichen vollständig mit der Elektromaschine 16a. Somit wird diesbezüglich eine axial sehr kleine Anordnung geschaffen.

Die Rotorträgeranordnung 62a, die den Rotor-Wechselwirkungsbereich 64a so trägt, dass dieser den Stator-Wechselwirkungsbereich 46a radial außen umgibt, ist mit dem Eingangsbereich 18a der Reibungskupplung 14a fest verbunden. Hier dienen beispielsweise die der Festlegung der Druckplattenbaugruppe 36a am Schwungrad 22a dienenden Schraubbolzen 102a gleichzeitig auch der Festlegung der Rotorträgeranordnung 62a. Diese kann hierzu einen radialen Flanschbereich 104a aufweisen, der zusätzlich an einem entsprechenden Ansatz der Gehäuseanordnung 34a der Reibungskupplung 14a radial zentriert sein kann. Um die Schraubbolzen 102a einschrauben zu können, weisen die vorangehend angesprochenen Permanentmagneten des Rotorwechselwirkungsbereichs 64a und ggf. auch das zugehörige Joch Umfangsbereiche auf, die ein axiales Hindurchführen dieser Schraubbolzen 102a ermöglichen. Beim Zusammensetzen dieses Systems wird zunächst die Rotoranordnung 60a durch die Schraubbolzen 102a an die Reibungskupplung 14a angebunden. Darauf folgend wird dann die Statoranordnung 44a, welche bereits bezüglich des Getriebes festgelegt sein kann, axial herangeführt, wobei dann auch der Betätigermechanismus 42a in Wechselwirkung mit dem Kraftspeicher 40a treten kann.

Alternativ ist es auch möglich, die Schraubbolzen 102a vor dem Anbringen des Rotor-Wechselwirkungsbereichs 64a an der Rotorträgeranordnung 62a durch den flanschartigen Bereich bzw. die flanschartigen Bereiche 104a hindurch zu schieben und dann erst den Rotorwechselwirkungsbereich 64a an der Rotorträgeranordnung 62 festzulegen, wobei dann gleichwohl in dem Rotorwechselwirkungsbereich 64a Ausnehmungen zum Durchgriff eines Werkzeugs, beispielsweise eines Inbusschlüssels oder dergleichen, vorgesehen sein müssen.

Durch die vorliegende Erfindung sind verschiedene Ausgestaltungsformen von Antriebssystemen gezeigt, durch weiche eine Antriebskraft von einem Antriebsaggregat auf eine Getriebeeingangswelle übertragen werden kann und gleichwohl auch ein Antriebsdrehmoment geliefert werden kann, beispielsweise um eine Brennkraftmaschine zu starten, oder auch elektrische Energie im Betrieb der Brennkraftmaschine gewonnen werden kann. Die Antriebssysteme sind so gestaltet, dass im Allgemeinen herkömmliche Komponenten im Bereich des Getriebes und auch im Bereich des Antriebsaggregats eingesetzt werden können, so dass dort keine durch die konkrete Ausgestaltung der verschiedenen Systembereiche des Antriebssystems grundsätzlich erzwungenen Änderungen erforderlich sind.

## Patentansprüche

1. Antriebssystem, umfassend:
- eine Elektromaschine (16) mit einer Statoranordnung (44) und einer mit einem Antriebsorgan zur gemeinsamen Drehung um eine Drehachse verbundenen oder verbindbaren Rotoranordnung (60), wobei durch die Elektromaschine (16) das Antriebsorgan zur Drehung antreibbar ist oder/und bei Drehung des Antriebsorgans elektrisch Energie gewinnbar ist,
- eine Kupplungsanordnung (14) mit einem mit dem Antriebsorgan zur gemeinsamen Drehung um die Drehachse verbundenen oder verbindbaren Eingangsbereich (18; 82) und wenigstens einem mit einem Abtriebsorgan (12) verbundenen oder verbindbaren Ausgangsbereich (32),
- eine die Elektromaschine (16) und die Kupplungsanordnung (10) umgebende Gehäuseanordnung (56, 68, 70) mit zwei in axialer Richtung aufeinander folgenden Gehäusebereichen (68, 70) und einem zwischen den beiden Gehäusebereichen (68, 70) angeordneten Gehäusezwischenbereich (56), an welchem die Statoranordnung (44) der Elektromaschine (16) getragen ist.

2. Antriebssystem nach Anspruch 1,
**dadurch gekennzeichnet, dass** einer (68) der Gehäusebereiche (68, 70) einen ersten Verbindungsbereich (72) aufweist, welcher zur Verbindung mit einem zweiten Verbindungsbereich (74) des anderen (70) der Gehäusebereiche (68, 70) ausgebildet ist, und dass am Gehäusezwischenbereich (56) in Zuordnung zu dem ersten Verbindungsbereich (72) ein dritter Verbindungsbereich (76) vorgesehen ist, welcher entsprechend dem zweiten Verbindungsbereich (74) ausgebildet ist, und in Zuordnung zu dem zweiten Verbindungsbereich (74) ein vierter Verbindungsbereich (78) vorgesehen ist, welcher entsprechend dem ersten Verbindungsbereich (72) ausgebildet ist.

3. Antriebssystem nach Anspruch 1 oder Anspruch 2,
**dadurch gekennzeichnet, dass** der Gehäusezwischenbereich (56) eine Kühlmittelströmungskanalanordnung (58) zum Führen von Kühlmittel in den Bereich eines Stator-Wechselwirkungsbereichs (46) der Statoranordnung (44) aufweist.

4. Antriebssystem nach einem der Ansprüche 1 bis 3,
**dadurch gekennzeichnet, dass** der Gehäusezwischenbereich (56) einen nach radial innen ragenden ersten Trägerabschnitt (52) einer Statorträgeränordnung (48) bereitstellt, mit welchem ein an seinem Außenumfang ein einen Stator-Wechselwirkungsbereich (44) tragender zweiter Trägerabschnitt (50) der Statorträgeranordnung. (48) getragen ist.

5. Antriebssystem nach Anspruch 3 und Anspruch 4,
**dadurch gekennzeichnet, dass** die Kühlmittelströmungskanalanordnung (58) einen Kanalbereich in dem ersten Trägerabschnitt (52) und einen Kanalbereich in dem zweiten Trägerabschnitt (50) aufweist.

6. Antriebssystem, umfassend:
- eine Elektromaschine (16a) mit einer Statoranordnung (44a) und einer mit einem Antriebsorgan zur gemeinsamen Drehung um eine Drehachse verbundenen oder verbindbaren Rotoranordnung (60a), wobei durch die Elektromaschine (16a) das Antriebsorgan zur Drehung antreibbar ist oder/und bei Drehung des Antriebsorgans elektrisch Energie gewinnbar ist,
- eine Kupplungsanordnung (14a) mit einem mit dem Antriebsorgan zur gemeinsamen Drehung um die Drehachse verbundenen oder verbindbaren Eingangsbereich (18a) und wenigstens einem mit einem Abtriebsorgan verbundenen oder verbindbaren Ausgangsbereich (32a),
wobei ein Stator-Wechselwirkungsbereich (46a) der Statoranordnung (44a) und ein Rotor-Wechselwirkungsbereich (64a) der Rotoranordnung (60a) an einer einem Getriebe zugewandt zu positionierenden Seite der Kupplungsanordnung (14a) angeordnet sind.

7. Antriebssystem nach Anspruch 6,
**dadurch gekennzeichnet, dass** eine Betätigeranordnung (42a) für die Kupplungsanordnung (14a) in einem von der Elektromaschine (16a) umgebenen Raumbereich (94a) angeordnet ist.

8. Antriebssystem nach Anspruch 6 oder 7,
**dadurch gekennzeichnet, dass** eine Statorträgeranordnung (46a) an dem Getriebe getragen ist.

9. Antriebssystem nach einem der Ansprüche 6 bis 8,
**dadurch gekennzeichnet, dass** eine Rotorträgeranordnung (62a) zusammen mit einer Druckplattenbaugruppe (36a) der Kupplungsanordnung (14a) an einer Schwungmasse (22a) des Eingangsbereichs (18a) der Kupplungsanordnung (14a) festgelegt ist.
